# DEMANDE DE BREVET EUROPEEN

(11) **EP 1 947 064 A1**
(43) Date de publication de la demande: **23.07.2008**
(21) Numéro de dépôt: 07100716.5
(22) Date de dépôt: 18.01.2007
(51) Int. Cl.: C03B 23/025

(54) **Bombage de feuilles de verre avec chauffage par micro-ondes**

(71) Demandeur: AGC Flat Glass Europe SA, 1170 Bruxelles (BE)
(72) Inventeur: La désignation de l'inventeur n'a pas encore été déposée
(74) Mandataire: Decamps, Alain René François

(57) **Abrégé**

La présente invention concerne une technique de bombage de feuilles de verre par gravité dans lequel les feuilles disposées sur un cadre destiné à leur conférer la forme périphérique finale, sont dans un premier temps portées à température voisine de la température de ramollissement par passage dans un four tunnel chauffé essentiellement par des résistances, au cours duquel les feuilles de verre subissent le cas échéant un premier bombage ou un bombage partiel, dans un deuxième temps, le cas échéant de façon simultanée avec l'achèvement du bombage engagé lors du premier temps, les feuilles sont soumises à l'application localisée et contrôlée de microondes pour accroître la température et faciliter le bombage dans les zones exposées.

## Description

La présente invention concerne les techniques de bombage de feuilles de verre et particulièrement les techniques visant la production de vitrages de formes complexes comme celles mise en oeuvre pour certains véhicules automobiles.

Dans la suite de la description il est fait référence aux techniques qui comportent nécessairement une montée en température de la feuille ou des feuilles de verre jusqu'à une température qui permet leur mise en forme par un ramollissement de la ou des feuilles. Lorsque les bombages en question se limitent à des grands rayons de courbures et sur des feuilles de forme relativement simple, les techniques traditionnelles qui utilisent le fléchissement du verre ramolli sous l'effet de son propre poids sont particulièrement préférées. Les feuilles de verre supportées à leur périphérie par un cadre qui reproduit la forme recherchée sont exemptes de contacts générateurs de défauts optiques à l'exception de ce contact avec le cadre. Les solutions comportant l'application d'une surface formant moule, même partiel, qui constituent une alternative à ce mode de formation par gravité, présentent l'inconvénient de marquer la surface de façon généralement inacceptable pour les usages considérés. Pour cette raison les techniques de bombage par gravité sont très largement utilisées.

L'invention a pour but de proposer des moyens permettant d'accéder à des bombages de formes complexes par des techniques à base de gravité.

Les inventeurs ont constaté dans des essais de formes très délicates à réaliser, notamment de formes combinant des courbures à grand rayon et petit rayon de courbure sur une même feuille, le cas échéant ces courbures de petit rayon étant limitées à des zones bien particulières sur la surface de la feuille, que le paramètre température intervient bien de façon prépondérante dans le formage, mais qu'il est aussi très important en raison des caractéristiques propres du matériau verrier de contrôler aussi la localisation précise des différentes températures qu'il peut être nécessaire de développer pour correspondre aux différentes courbures. Ils ont encore mis en évidence que le choix des températures devait en outre suivre une chronologie rigoureuse, la formation des courbures de nature différentes devant intervenir de manière parfaitement contrôlée.

Des techniques comportant des chauffages localisés ont été proposées antérieurement notamment pour faciliter la formation des courbures de faible rayon. Les moyens proposés pour ces chauffages localisés sont du même type que ceux mis en oeuvre pour le chauffage général. Ils sont simplement ajoutés aux précédents. Il s'agit en particulier de moyens de chauffage par des résistances électriques. Le cas échéant ces moyens supplémentaires de chauffage sont supportés par des éléments mobiles à l'intérieur des fours de bombage pour venir au plus près des feuilles de verre aux emplacements choisis.

Les éléments de chauffage du type résistance électrique fonctionnent avec une inertie certaine. La montée en température comme la descente n'est pas instantanée. Cette particularité emporte plusieurs conséquences. Tout d'abord il est difficile de maîtriser parfaitement l'apport de chaleur par ce moyen en notamment lorsque le passage des feuilles traitées doit s'effectuer en continu. Dans ce cas la localisation est difficilement compatible avec ce mode de chauffage.

Pour cette raison le chauffage effectivement localisé, qui ne correspond pas nécessairement à une zone qui s'étend dans toute la dimension de la feuille défilant sous le moyen de chauffage en question, ne peut être convenablement obtenu qu'avec des ensembles assurant l'avancement des feuilles "pas à pas". Le moyen de chauffage est alors rigoureusement placé en fonction de la zone de la feuille nécessitant ce chauffage.

Même dans le cas d'une progression "pas à pas" le chauffage par résistance conduit à une maîtrise incomplète, toujours en raison de l'inertie thermique des moyens utilisés. Ce chauffage ajoute à la lenteur relative de production qui est caractéristique des systèmes "pas à pas" comparé aux systèmes opérant par un défilement continu.

Une autre caractéristique des systèmes de chauffage localisé comprenant des résistances, est le rendement énergétique de ce chauffage, autrement dit la part de ce chauffage qui contribue effectivement au chauffage du verre. Dans les systèmes traditionnels utilisant des résistances chauffantes la très grande majorité de l'énergie se disperse dans les différents éléments du four, une faible part contribuant effectivement à l'accroissement de température du verre dans la zone visée.

Un but de l'invention est donc, dans des techniques de bombage de feuilles de verre opérant essentiellement, ou même exclusivement par gravité, de résoudre au moins partiellement les difficultés rencontrées précédemment avec les techniques de chauffage à partir de moyens comprenant des résistances chauffantes.

Selon l'invention il est procédé au chauffage localisé au moyen d'application de rayonnement microondes. Selon l'invention le rayonnement est appliqué sur des feuilles de verre préalablement chauffées de manière traditionnelle à une température voisine de celle de ramollissement.

Le rendement du chauffage microondes, à savoir l'accroissement local de la température de la feuille pour une puissance délivrée déterminée est fonction de la température de la feuille sur laquelle ces microondes sont appliquées. Plus la température du verre est élevée plus l'échauffement de la feuille par l'application d'une puissance donnée est élevé. Pour cette raison il est avantageux de procéder à des feuilles portées préalablement à une température suffisamment élevée.

En pratique il est préférable de faire en sorte que les feuilles de verre soient à une température d'au moins 450°C, et le plus souvent à des températures supérieures à 500°C.

La température de la feuille au moment de l'application des microondes peut être très voisine de celle qui permet le bombage dans les parties des feuilles subissant un bombage modéré.

Compte tenu de ce que l'apport thermique est destiné à faciliter le bombage dans des zones bien délimitées des feuilles de verre, et laisse inchangé le conditionnement des zones voisines, il est préférable de faire en sorte que cet apport soit effectué dans un temps aussi bref que possible de telle sorte que s'établisse un bon gradient de température entre les zones chauffées par ces microondes et celles qui ne le sont pas.

Par ailleurs un chauffage dans un temps très limité permet éventuellement une application dans des systèmes dans lesquels les feuilles traitées progressent de façon continue.

Avantageusement le temps d'application des microondes n'est pas supérieur à 200s et de préférence ne dépasse pas 100s. Il peut être selon les cas de moins de 60s.

Pour obtenir des temps de chauffage aussi brefs la puissance délivrée par unité de masse de verre traité est avantageusement supérieure à 4kW/kg de verre, et de préférence de plus de 10kW/kg. Cette puissance peut être, si besoin, supérieure à 20W/kg.

Selon l'invention la puissance mise en oeuvre est choisie pour que dans les conditions d'application des microondes l'élévation de température de la ou des feuilles de verre dans les zones exposées soit d'au moins 1°C/s et de préférence d'au moins 2°C/s. L'élévation de température est de façon particulièrement préférée d'au moins 3°C/s de telle sorte que le temps d'exposition puisse être aussi bref que possible.

Le bon couplage du verre préchauffé avec les microondes conduit à une optimisation de l'utilisation de la puissance consommée par le générateur de microondes. Pour des feuilles superposées de 2,1mm chacune et une surface de traitement de 0,05m², il est ainsi possible, selon l'invention, de parvenir à un accroissement de température localement qui atteint 0,4°C/s par kW mis en oeuvre. Il est même avantageux selon la construction du dispositif de parvenir à un accroissement de 0,6°C/s/kW ou plus.

Le couplage du verre et des microondes est encore fonction des constituants du verre. Les valeurs indicatives précédentes sont données pour un verre de type silico-sodo-calcique "float" clair traditionnel. Pour des verres comportant une quantité des constituants sensibles au couplage tels que les composés notamment les ions des constituants alcalins, ou ceux des métaux inclus comme notamment le fer la puissance nécessaire peut être moins importante.

La fréquence utilisée est de l'ordre de celle mise en oeuvre dans les installations industrielles faisant appel à ces techniques de chauffage et qui sont règlementées. Une gamme de fréquences usuelle est 1 à 10GHz. De préférence la fréquence se situe à 2,45GHz environ, fréquence qui est traditionnelle pour toute une gamme de générateurs disponibles.

Le choix de procéder à un chauffage localisé sur des périodes de temps aussi brèves nécessite de disposer de moyens développant des puissances instantanées relativement importantes. En contrepartie, compte tenu de l'efficacité de ces moyens et de la sensibilité de l'opération à la température du verre traité, il est nécessaire de bien contrôler l'application de cet apport énergétique en fonction de l'évolution de la température du verre. Pour maîtriser convenablement le processus de chauffage localisé, et au-delà celui du bombage qui en résulte, il apparaît nécessaire de mesurer en continu l'évolution de la température du verre. L'application des microondes suit de préférence un programme commandé par cette évolution de la température.

Un avantage de l'utilisation de microondes par rapport à un chauffage traditionnel est de pouvoir concentrer une part beaucoup plus importante de l'énergie dégagée dans le matériau à chauffer. Alors que les moyens traditionnels que sont les résistances chauffent d'une part le verre mais aussi les éléments situés au contact de celui-ci et de surcroît les parties du four situées en face des résistances mais au-delà du verre, ce dernier n'absorbant qu'une fraction du rayonnement infrarouge, il est possible selon l'invention de disposer des réflecteurs des microondes qui maintiennent l'essentiel de l'apport de puissance dans le verre lui-même et préviennent l'échauffement d'éléments étrangers à ce chauffage localisé.

En pratique, un mode consiste à disposer de l'autre côté des feuilles de verre par rapport à la source de microondes un réflecteur qui peut être constitué d'une simple feuille ou grille métallique. Ce réflecteur peut se limiter aux emplacements qui sont exposés aux microondes.

L'usage du chauffage microondes est aussi beaucoup plus uniforme dans l'épaisseur du verre alors que le chauffage traditionnel crée inévitablement des gradients significatifs dans cette épaisseur et d'autant plus que celle-ci est plus grande.

L'invention est décrite de façon détaillée dans la suite en faisant référence aux planches de dessins dans lesquelles :
- la figure 1 est une représentation schématique d'une installation pour le bombage de feuilles de verre de l'art antérieur;
- la figure 2 est une vue analogue à la précédente comportant des dispositions caractéristiques de l'invention ;
- la figure 3 est une vue schématique présentent un mode de mise en oeuvre selon l'invention ;
- la figure 4 représente l'évolution des températures dans les feuilles de verre dans une opération comportant un chauffage localisé selon l'invention.

Selon le mode traditionnel le plus usuel, les feuilles de verre 1 sont disposées sur un cadre 2 destiné en fin de formation à recevoir et soutenir les feuilles de verre à leur périphérie. Selon la production, le traitement est appliqué à une ou deux feuilles de verre. Le traitement simultané de deux feuilles est classique pour le bombage de feuilles ultérieurement assemblées dans un vitrage feuilleté pour garantir un bon appariement.

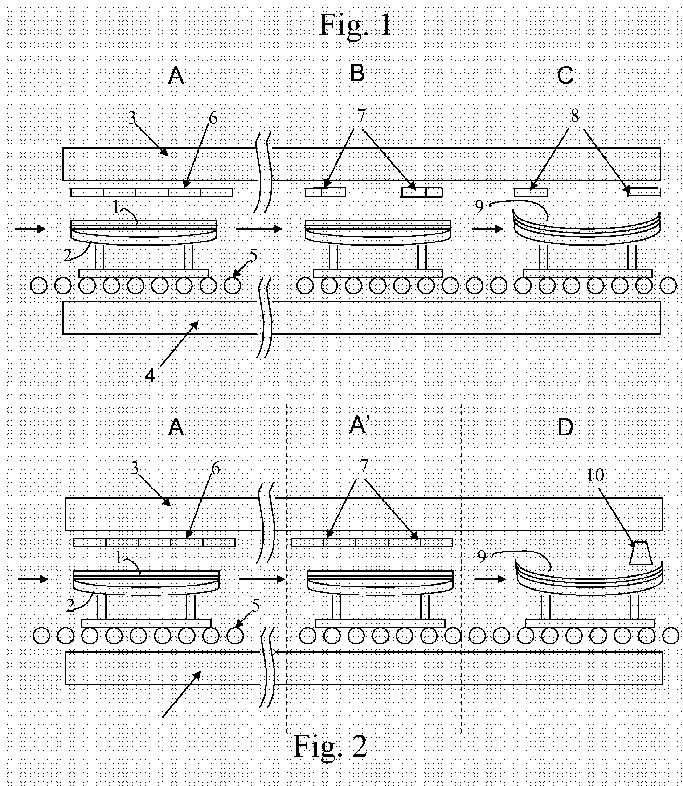

Dans le schéma de la figure 1, le cadre est représenté sans modification de forme au cours du processus. Ces cadres sont de ceux utilisés lorsque les incurvations formées sont relativement faibles. Lorsque, notamment les parties latérales à la fin du processus doivent présenter une forte incurvation il est traditionnel d'utiliser des cadres présentent des parties articulées, lesquelles sont mobiles au cours du bombage. Le plus usuel dans ce domaine correspond au relèvement des parties latérales du cadre lorsque les feuilles de verre ont commencé de fléchir.

La mise en oeuvre de l'invention concerne l'ensemble des techniques de bombage sur cadre, articulé ou non, même si celle-ci se trouve plus utile dans le cas des bombages plus accentués et donc avec des cadres articulés.

Sur le schéma de la figure 1 les feuilles de verre 1 portées par le cadre 2 sont transportées dans un four de type tunnel représenté par ses parois supérieures 3, et inférieures 4. Le cheminement du cadre dans le four est assuré par exemple par une série de rouleaux convoyeurs 5, ou par tout moyen équivalent.

Des éléments de chauffage 6 constitués de résistances électriques sont représentés disposés sur la paroi supérieure 3 du four. Des éléments analogues sont généralement disposés également sous le convoyeur et/ou sur les parois latérales.

Le début de la progression du verre dans le four comporte un chauffage qui est généralement distribué de façon la plus homogène possible. La distribution des éléments chauffants est donc en fonction de cet objectif. Le cas échéant l'homogénéisation de la température peut être facilitée par l'aménagement de courants de convection forcée. Une difficulté généralement rencontrée est l'obtention d'une température sensiblement égale pour les deux feuilles superposées, lorsque deux feuilles sont traitées simultanément, ou pour une seule feuille l'obtention d'une température homogène dans toute l'épaisseur de celle-ci.

La durée de la phase de montée en température est en partie au moins commandée par le temps nécessaire à l'obtention de ces températures homogènes, sinon uniformes, en tout point des feuilles. Plus lente est cette montée en température plus celle-ci est homogène. Néanmoins pour des raisons économiques, bien compréhensibles les dimensions du four doivent être limitées, en particulier par ce que le rendement énergétique de l'ensemble est d'autant moins favorable que le four est plus long, les pertes étant fonction des dimensions du four. Il faut donc se résoudre à mettre en oeuvre un compromis entre l'homogénéité et le rendement énergétique, et toute mesure permettant d'améliorer la vitesse de traitement sans perdre en homogénéité est recherchée.

Dans le schéma de la figure 1, les éléments chauffants 6 sont présentés répartis selon une disposition régulière dans la phase de préchauffage (A). Il va de soi que la disposition des éléments chauffants est fonction de la configuration de l'ensemble, et que selon les cas il est nécessaire d'aménager la répartition des éléments chauffants de façon différente, le but restant toujours d'obtenir que les feuilles de verre présentent la bonne distribution de température.

Dans les techniques antérieures, au traitement homogène pouvait s'ajouter un chauffage localisé. Deux conditions étaient cependant nécessaires en raison des caractéristiques propres des moyens de chauffage par résistance mis en oeuvre : ce chauffage devait être maintenu suffisamment longtemps pour parvenir à une incidence significative, et par ailleurs, en raison même de ce temps nécessaire, la mise en oeuvre était pratiquement limitée aux opérations conduites dans les fours fonctionnant "pas-à pas", sauf à utiliser des systèmes sensiblement plus compliqués.

Dans le schéma de la figure 1 le chauffage localisé est symbolisé par des éléments chauffants 7 en étape (B), et 8, étape (C). Dans cette représentation le chauffage localisé est maintenu suffisamment longtemps et jusque dans la dernière phase du processus de bombage, phase au cours de laquelle les feuilles de verre prennent leur forme définitive comme schématisé en 9. Dans cette phase les feuilles de verre après la mise en condition thermique s'affaissent sous leur propre poids et viennent s'appliquer sur le cadre 2.

Dans la représentation de la figure 1, l'application de moyens de chauffage supplémentaires est indiquée comme mise en oeuvre avant le formage même partiel des feuilles de verre. En pratique il est possible aussi de procéder alors que le bombage est commencé. L'utilisation des moyens supplémentaires de chauffage qui permet de procéder aux courbures les plus accentuées peut aussi intervenir sur des feuilles en partie formée. Dans ce cas, dans les techniques antérieures une difficulté tient au fait que l'exposition des feuilles qui ne se présentent plus dans un plan sensiblement parallèle face aux moyens de chauffage ne favorise pas l'efficacité et la précision de ce chauffage.

La figure 2 reprend pour partie les dispositions de la figure 1. Elle schématise les différentes étapes de la technique de bombage mise en oeuvre selon l'invention.

Dans la technique visée à la figure 2, le même mode de chauffage prévaut dans la première phase (A). La température de la ou des feuilles de verre est progressivement élevée de manière sensiblement homogène. Le four est chauffé en utilisant les moyens usuels constitués pour l'essentiel de résistances chauffantes dont l'action s'exerce de façon prépondérante par rayonnement infrarouge. Compte tenu de la durée du séjour les feuilles parviennent à une certaine uniformité de température. Il n'existe pas de gradient significatif sur l'étendue des feuilles. Un certain gradient se maintient généralement dans l'épaisseur en raison du mode d'application par rayonnement. En effet même en disposant des moyens de chauffage sur la partie inférieure du four, la présence des moyens convoyeurs et support du cadre limitent les possibilités de chauffage par rayonnement depuis la sole. Ceci peut en partie être compensé par de l'adjonction de chauffage par convection.

Dans une certaine mesure, en maîtrisant mieux le chauffage localisé ultérieur, la phase de chauffage "général" est susceptible d'être un peu écourtée. En effet dans les techniques traditionnelles le complément de chauffage localisé ne permettant qu'un réchauffement lent, la tendance est d'utiliser au maximum le chauffage global, ce qui a deux conséquences, d'une part celle de nécessiter un chauffage un peu plus intense ou plus long, et d'autre part, de ne pas bien dissocier l'apport nécessaire localement et le chauffage de l'ensemble. Cette dernière conséquence rend très difficile la réalisation de bombages très localisés et/ou imposant une forte incurvation locale sur une feuille qui par ailleurs doit avoir une courbure générale limitée. Par une préparation trop poussée de la mise en condition thermique initiale, le risque est de dépasser ce qui est nécessaire pour le bombage "d'ensemble".

Pour indiquer le fait que le chauffage général peut être un peu écourté, nous avons mis entre deux traits pointillés la phase référencée (A') qui n'est que la poursuite de la phase initiale et qui selon les cas peut être omise.

Lorsque la température globale parvient à un valeur suffisante pour que l'accroissement supplémentaire pour atteindre aux conditions de fléchissement nécessaires au bombage "global", ne demande plus que très peu de temps, les feuilles de verre sont soumises localement au chauffage au moyen de microondes appliquées limitativement aux parties devant atteindre à une température plus élevée. De cette façon le chauffage localisé, qui est très bref, s'opère en même temps que la fin du chauffage nécessaire au bombage "global".

La mise en oeuvre du chauffage par microonde est suffisamment bref pour pouvoir en outre être effectué sur de vitrages défilant en continu. Comme indiqué précédemment, ce chauffage peut être effectué en quelques secondes et en conséquence, en dépit d'un mouvement continu des feuilles, peut ne concerner qu'une surface très limitées de celles-ci.

A la figure 2, on a représenté l'antenne 10 conduisant les microondes vers la zone des feuilles de verre devant subir le bombage le plus intense. Dans ce schéma de principe elle figure à la dernière étape du bombage (D). Cette intervention peut être faite également avant que le bombage global soit intervenu, mais pour les raisons indiquées précédemment il n'est pas souhaitable qu'elle soit mise en oeuvre beaucoup plus tôt.

Un avantage du chauffage localisé par microondes est d'être beaucoup plus facilement orienté qu'avec les moyens traditionnels à rayonnement infrarouge. La localisation est réalisée au moyen d'une antenne qui peut se situer à distance du générateur de microondes. Il est ainsi possible, de façon beaucoup plus commode et plus efficace d'intervenir même alors que le bombage "général" des feuilles ayant été engagé, celles-ci ne sont plus disposées à l'horizontale, mais en particulier pour des parties latérales, celles-ci sont en partie "relevées".

A titre d'exemple de mise en oeuvre de l'invention, deux feuilles de verre sont superposées et mise à l'horizontale sur un cadre support. La première feuille est une feuille de verre clair de 2,1mm d'épaisseur. Elle est disposée sur une feuille de même dimensions de 2,6mm d'épaisseur d'un verre légèrement teinté par un contenu en ions fer (verre dit TSA).

L'ensemble est passé dans un four tunnel traditionnel chauffé au moyen de résistances électriques. La montée en température des feuilles est progressive. La montée initiale est relativement rapide. Les feuilles atteignent une température voisine de 500°C en environ 3mn. La progression ultérieure en approchant de la température de ramollissement est volontairement maintenue plus lente de manière à faciliter l'homogénéité des températures sur l'ensemble des feuilles. La progression est ensuite d'environ 50 puis 25°C par minute. La température la plus haute est de l'ordre de 650°C. A cette température atteinte environ après 6 mn 30s, le bombage "général" peut se développer complètement.

Pour procéder au bombage localisé selon l'invention on utilise dans cet essai un générateur de 6kW, émettant à 2,45GHz. Le guide d'onde disposé face aux feuilles de verre est en forme de cornet pyramidal tronqué. Son ouverture vers les feuilles est de 7×15cm. Il est situé à 60mm des feuilles. Sous les feuilles, à 95mm de celles-ci est placée une plaque réfléchissant les microondes de telle sorte que la puissance est dissipée principalement dans le verre.

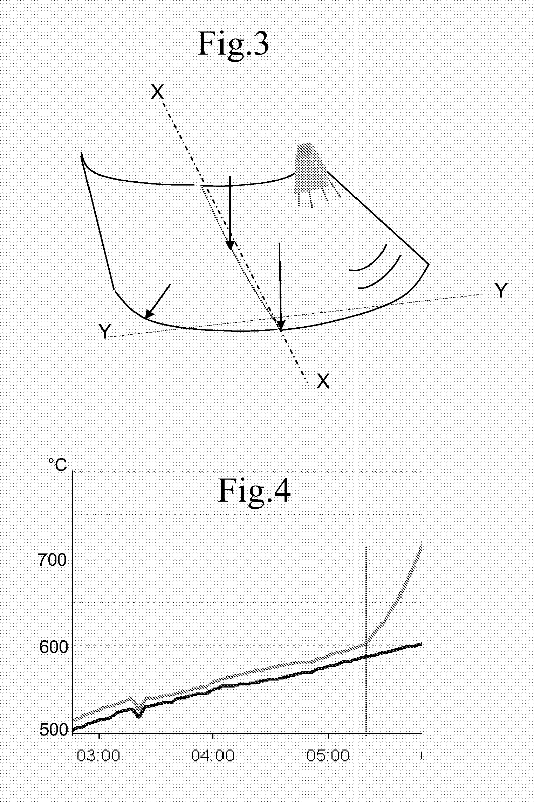

Le chauffage par microondes est déclenché alors que la température du verre est d'environ 590°C. La montée en température dans la zone exposée aux microondes est alors extrêmement rapide comme indiqué à la figure 4 à la courbe supérieure (tracé le plus clair). En 40 secondes environ la température de la zone en question est portée à la température de 700°C, quand les parties de la feuille non exposées aux microondes n'atteignent que 600°C.

La montée en température dans la zone exposée aux microondes est de l'ordre de 4°C/s ou plus.

La température élevée permet un bombage très intense sans nécessiter d'efforts mécaniques important, alors que dans le même temps les parties des feuilles qui sont à une température sensiblement inférieure (courbe de tracé plus sombre de la figure 4), ne subissent qu'un fléchissement limité.

Le déclenchement et la progression du chauffage par microondes doit être suivi de façon très précise en raison de son efficacité. Dans le bombage il faut en effet éviter une "surchauffe" qui aurait pour conséquence un ramollissement excessif des feuilles de verre. Pour cette raison les moyens de chauffage localisés selon l'invention sont couplés avec des moyens de mesure instantanés de la température de la zone traitée, et un ensemble de commande programmé en fonction de l'évolution de la température.

Bien entendu il est possible de moduler les puissances mises en oeuvre et le temps d'exposition. La puissance est aussi distribuée le cas échéant par plusieurs guides d'ondes permettant une localisation selon une géométrie appropriée à la configuration du bombage recherché.

## Revendications

1. Procédé de bombage de feuille de verre par gravité dans lequel les feuilles disposées sur un cadre destiné à leur conférer la forme périphérique finale, sont dans un premier temps portées à température voisine de la température de ramollissement par passage dans un four tunnel, au cours duquel les feuilles de verre subissent le cas échéant un premier bombage ou un bombage partiel, dans un deuxième temps, le cas échéant de façon simultanée avec l'achèvement du bombage engagé lors du premier temps, les feuilles sont soumises à l'application localisée et contrôlée de microondes pour accroître la température et faciliter le bombage dans les zones exposées.

2. Procédé selon la revendication 1 dans lequel l'application localisée de microondes est effectuée sur les feuilles de verre portées préalablement à une température qui n'est pas inférieure à 450°C.

3. Procédé selon la revendication 1 dans lequel l'application localisée de microondes est effectuée sur les feuilles de verre portées préalablement à une température qui n'est pas inférieure à 500°C.

4. Procédé selon l'une des revendications précédentes dans lequel la température du verre dans la zone d'application est mesurée pour déclencher et contrôler l'application localisée des microondes.

5. Procédé selon l'une des revendications précédentes dans lequel le chauffage par microondes est appliqué de manière à créer un gradient de température entre les zones traitées et les zones avoisinantes dont l'ampleur est d'au moins 3 et de préférence 5°C/cm.

6. Procédé selon l'une des revendications précédentes dans lequel l'application de microondes est maintenue pendant une période de temps qui n'excède pas 200, et de préférence pas 100s.

7. Procédé selon l'une des revendications précédentes dans lequel la puissance délivrée par le faisceau microondes par kg de verre traité est d'au moins 4 kW/kg et de préférence au moins 10W/kg.

8. Procédé selon l'une des revendications précédentes dans lequel la puissance délivrée est choisie telle que l'élévation de température des feuilles dans les zone exposées soit d'au moins 1° et de préférence supérieur à 2°C/s.

9. Procédé selon l'une des revendications précédentes dans lequel la fréquence du générateur de microondes est dans le domaine de 1 à 10 GHz et d préférence voisin de 2,45GHz.

10. Procédé selon l'une des revendications précédentes dans lequel les feuilles de verre traitées sont disposées entre l'émetteur de microondes et un élément réflecteur de celles-ci.
